# EUROPÄISCHE PATENTSCHRIFT

(11) **EP 2 478 756 B1**
(45) Veröffentlichungstag und Bekanntmachung des Hinweises auf die Patenterteilung: **03.04.2013**
(21) Anmeldenummer: 12150071.4
(22) Anmeldetag: 03.01.2012
(51) Int. Cl.: A01D 89/00, A01D 90/02

(54) **Ladewagen**
Loading vehicle
Chariot de chargement

(30) Priorität: 19.01.2011 DE 102011002875
(43) Veröffentlichungstag der Anmeldung: 25.07.2012
(73) Patentinhaber: Kverneland A/S, 4355 Kvernaland (NO)
(72) Erfinder:
(74) Vertreter: Grünecker, Kinkeldey, Stockmair & Schwanhäusser

(56) Entgegenhaltungen:
- EP-A1- 1 932 418
- EP-A1- 1 982 574
- AT-B- 378 663
- CH-A- 399 051
- FR-A1- 2 776 467

## Beschreibung

Die Erfindung betrifft einen Ladewagen der im Oberbegriff des Patentanspruchs 1 angegebenen Art.

Bei dem aus AT 378 663 B bekannten, gattungsgemäßen Ladewagen ist ein antriebsseitiger Seitenschenkel des Schwenkrahmens über ein Gelenkdreieck und ein chassisfestes Kugelgelenk am Chassis abgestützt, während der gegenüberliegende Seitenschenkel über ein Gelenkviereck am Chassis abgestützt ist, so dass die Pick-Up zusätzlich zu parallelen Höhenbewegungen relativ zum Chassis eine überlagerte Schwenk-Kippbewegung um das Zentrum des Kugelgelenks auszuführen vermag. Bei der Kipp-Schwenkbewegung führt der antriebsseitige Seitenschenkel im Wesentlichen nur ganz kleine Schrägstellbewegungen im Kugelgelenk aus, während der gegenüberliegende Seitenschenkel des Schwenkrahmens eine erheblich stärkere Kippbewegung erfährt und dabei über das Gelenkviereck und das Tastrad zwangsgesteuert wird. Bei dieser Zwangssteuerung wird die vom Bodenverlauf abhängige Anhebe- oder Absenkbewegung des Tastrades an der dem Antrieb abgewandten Seite für dieses Ende der Pick-Up im Seitenschenkel im Ausmaß ins Größere übersetzt und wird die Geschwindigkeit ins Schnellere gewandelt, so dass sich die Pick-Up an diesem Ende auf andere Weise (stärker und schneller) bewegt, als das Tastrad den Boden kopiert. Die überlagerte Kipp-Schwenkbewegung der Pick-Up wird weitestgehend nur an einem Ende der Pick-Up initiiert, um eine verbesserte Bodenanpassung zu erzielen. Dies kann in einem unzweckmäßig großen Öffnungsspalt an einer Seite der Pick-Up in Relation zum Förderkanal und zum Förderaggregat resultieren, aus dem Störungen beim Ernteguttransport entstehen können. Da an der Antriebsseite ein Kettentrieb zum Chassis vorgesehen ist, dessen Kette nur eine begrenzte Verschränkung verträgt, wird die Schwenk-Kippbewegung der Pick-Up um den Gelenkmittelpunkt des Kugelgelenks am Chassis auch auf der dem Antrieb abgewandten Seite des Schwenkrahmens auf ein relativ kleines Maß begrenzt, was der Bodenanpassung abträglich ist.

Bei einem aus EP 1 982 574 A bekannten Ladewagen sind für die Pick-Up und das Förderaggregat getrennte Antriebe vorgesehen, die hydraulisch ausgebildet sein und/oder einen Hydromotor aufweisen können.

Aus DE 102 27 484 A ist ein Erntefahrzeug bekannt, bei dem ein als Schneidwerk ausgebildetes Aufnahmegerät in seiner Lage gegenüber dem Boden über wenigstens eine Steuereinrichtung in Abhängigkeit von durch Sensoren ermittelten Bodenabstand einstellbar ist. Auch lässt sich der Schneidwinkel des Schneidwerks um eine quer zur Fahrtrichtung orientierte Achse automatisiert an dem Bodenverlauf anpassen. Das Schneidwerk ist über einen Schwenkadapter am vorderen Ende eines auf- und abschwenkbaren Förderkanals angeordnet und lässt sich relativ zu dem Schwenkadapter um eine ideelle und in Fahrtrichtung orientierte Achse mittels zweier seitlich außen am Schwenkadapter angeordneter Hydraulikzylinder kippen. Das Schneidwerk wird ohne Tasträder durch mit der Steuerung gekoppelte Sensoren und Bodentaster über Bodenunebenheiten, Anstiege und Gefälle im Abstand vom Boden geführt, wobei die erforderlichen Bewegungen auf hydraulischem Weg erzeugt werden müssen.

Bei dem aus DE 20 2004 012 600 U1 bekannten Ladewagen ist die Pick-Up in einem U-förmigen, starren Schwenkrahmen gelagert, dessen Querholm die Achse der Pick-Up bildet, und dessen Seitenschenkel an einer quer zur Fahrtrichtung liegenden, annähernd bodenparallelen Schwenkachse im Ladewagen-Chassis angelenkt sind. Seitlich außenliegende Tasträder und mindestens ein in Fahrtrichtung hintenliegendes, inneres Tastrad sind an einem zweiten, Tandemschwingen und einen Querholm aufweisenden, U-förmigen Rahmen angeordnet, der über an den Tandemschwingen angelenkte Schwenkarme an einer ebenfalls quer zur Fahrtrichtung liegenden Schwenkachse im Ladewagen-Chassis gelagert ist. Die Schwenkarme sind mit den Seitenschenkeln des Schwenkrahmens über Lenker gekoppelt. Von den Tasträdem abgetastete Bodenunebenheiten werden nicht direkt auf den Schwenkrahmen der Pick-Up übertragen, sondern indirekt über Schwenkbewegungen der Tandemschwingen, um eine verbesserte Bodenanpassung, jedoch nur in Fahrtrichtung, zu erzielen. Der Drehantrieb der Pick-Up ist im Ladewagen-Chassis angeordnet und treibt die Pick-Up über einen Kettentrieb zu einem Seitenschenkel des Schwenkrahmens. Bei durch die Tasträder initiierten Relativbewegungen zwischen der Pick-Up und dem Ladewagen-Chassis bewegt sich die Achse der Pick-Up stets parallel zur Schwenkachse am Ladewagen-Chassis, so dass die Bodenanpassung an Unebenheiten quer zur Fahrtrichtung nicht zufriedenstellend ist.

Weiterer Stand der Technik ist zu finden in EP 1 932 418 A, CH 399 051 A und FR 2 776 467 A.

Der Erfindung liegt die Aufgabe zugrunde, einen Ladewagen mit verbesserter Pick-Up-Bodenanpassung auch bei quer zur Fahrtrichtung auftretenden Unebenheiten zu schaffen, und dabei die Gefahr zu minimieren oder auszuschließen, dass bei der Übergabe von Erntegut von der Pick-Up zum Förderaggregat Verstopfungen auftreten.

Die gestellte Aufgabe wird mit den Merkmalen des Patentanspruchs 1 gelöst.

Aus der kippbaren Abstützung in etwa in der Mitte der Pick-Up und in der Aufhängung resultiert eine signifikant verbesserte Bodenanpassung auch bei quer zur Fahrtrichtung auftretenden Unebenheiten. Jedoch verteilt sich der Gesamtkippversatz der Pick-Up zu im Wesentlichen gleichen Teilen auf beide Seiten der Längsmitte, so dass an jeder Seite bei Kippbewegungen ein relativ geringer Versatz gegenüber dem Förderaggregat auftritt, der eine Verstopfungsgefahr minimiert oder ausschließt. Da der Drehantrieb die Kippbewegungen mitmacht und eigenständig nur der Pick-Up zugeordnet ist, d.h., vom Ladewagen-Chassis separiert ist, schafft er die kinematischen Voraussetzungen zur besseren Bodenanpassung auch quer zur Fahrtrichtung, denn es entfällt die Notwendigkeit einer starren, eine am Ladewagen-Chassis erzeugte Antriebsbewegung auf die Pick-Up übertragenden Fluchtung zwischen Drehantriebsteilen am Ladewagen-Chassis und an der Pick-Up. Dabei weist die Aufhängung ein auf die Längsmitte der Pick-Up ausgerichtetes, gegenüber der Achse in Fahrtrichtung versetztes Kippgelenk für den Pick-Up-Schwenkrahmen auf, vorzugsweise ein nach Art eines Kugelgelenks ausgebildetes Kippgelenk. Dieses Kippgelenk bietet nicht nur die Möglichkeit, im Wesentlichen auf- und abwärtsgerichtete Kippbewegungen der Pick-Up um die Längsmitte zur Bodenanpassung zuzulassen, sondern hat mehrere Freiheitsgrade, die für die Bewegungen der Pick-Up nutzbar sind. Wenn die Pick-Up durch die Tasträder in ihrer Längsmitte im Kippgelenk relativ zum Förderaggregat gekippt ist, entsteht an jeder Endseite der Pick-Up ein hälftig beiderseits des Kippgelenks verteilter Versatz, wodurch das Spaltmaß zwischen der Pick-Up und einer Übergabestelle zum Förderaggregat stets minimal bleibt, um einen optimalen Erntegutfluss zu gewährleisten.

Zweckmäßig weist die Aufhängung einen U-förmigen Zwischenrahmen mit am Ladewagen-Chassis um eine Schwenkachse schwenkbar angelenkten Seitenschenkeln und einem zur Pick-Up-Achse in etwa parallelen Querholm auf. Das Kippgelenk ist zwischen dem Zwischenrahmen-Querholm und dem Pick-Up-Schwenkrahmen angeordnet, wobei der Zwischenrahmen mit dem Pick-Up-Schwenkrahmen zusätzlich über seitliche Pendelstützen gelenkig gekoppelt wird. Vorzugsweise ist je eine endseitige, kugelgelenkartig eingekoppelte Pendelstütze zwischen einem Zwischenrahmen-Seitenschenkel und einem Pick-Up-Schwenkrahmen-Seitenschenkel montiert. Obwohl in dieser Aufhängung die Pick-Up die für eine weitgehend ideale Bodenanpassung erforderlichen Bewegungen auszuführen vermag, ist sie dennoch universell abgestützt, kann sie auch reine Höhenbewegungen ausführen, und lässt sie sich z.B. am Vorgewende oder zur Transportfahrt ausheben.

Günstig ist jedes Tastrad an einem im Ladewagen-Chassis schwenkbaren Radträger angebracht, und wird der Radträger mit einem Pick-Up-Schwenkrahmen-Seitenschenkel über einen Lenker gekoppelt. Der Lenker ist eine mehrere Anlenkstellen aufweisende Einstellschiene, um die Relativpositionen zwischen den Tasträdern und der Pick-Up nach Bedarf ändern zu können. Bei der Bodenanpassung schwenkt jedes Tastrad mit dem Radträger individuell am Ladenwagen-Chassis und wird diese individuelle Tastradbewegung über den Lenker auf den Pick-Up-Schwenkrahmen übertragen, der nicht nur auf- und abverlagerbar ist, sondern auch im Kippgelenk kippen kann.

Zweckmäßig ist die Pick-Up mit den Tasträdern über den Zwischenrahmen, das Kippgelenk und die Pendelstützen relativ zum Ladewagen-Chassis aushebbar.

Um Kollisionen zwischen der Pick-Up oder deren Schwenkrahmen und anderen Komponenten des Ladewagens zu vermeiden, sind, vorzugsweise, an den Pick-Up-Schwenkrahmen-Seitenschenkeln Anschläge für die Pendelstützen vorgesehen. Diese Anschläge können neben der Begrenzungsfunktion für die Kippbewegung auch eine Dämpfungsfunktion erfüllen, und zwar mit günstigen Hebelarmen in Bezug auf das Kippgelenk. Deshalb kann es zweckmäßig sein, wenn die Anschläge dämpfendes und/oder elastisches Material aufweisen, wie beispielsweise Gummi oder Elastomer. Dieses Material kann an den Anschlägen oder am Schwenkrahmen oder an der Pendelstütze verbaut sein.

Der Drehantrieb der Pick-Up weist zweckmäßig wenigstens einen Hydromotor oder Elektromotor auf. Dieser kann entweder direkt an einer Antriebswelle der Pick-Up installiert sein, oder an einem Seitenschenkel des Schwenkrahmens, und dann über eine Getriebeverbindung mit der Antriebswelle gekoppelt werden. Da der Drehantrieb die Bewegungen des Schwenkrahmens bzw. dessen Seitenschenkels relativ zum Ladewagen-Chassis mitmacht, wird keine starre Fluchtung zwischen Antriebsteilen an dem Ladewagen-Chassis und dem Schwenkrahmen benötigt, was die kinematischen Voraussetzungen für die relativen Kippbewegungen der Pick-Up schafft.

Der Drehantrieb ist zweckmäßig an wenigstens einen flexiblen Versorgungsstrang angeschlossen, der flexibel und/oder lang genug ist, zumindest die relativen Kippbewegungen der Pick-Up zu tolerieren. Der Versorgungsstrang kann zu einer Zugdeichsel des Ladewagens führen oder zum Ladewagen-Chassis oder direkt zu einem den Ladewagen ziehenden Schlepper. Der Versorgungsstrang stellt beispielsweise Hydraulikenergie oder elektrischen Strom zur Verfügung und toleriert neben den Kippbewegungen auch Aushebebewegungen der Pick-Up.

Zweckmäßig enthält die Getriebeverbindung im autarken Drehantrieb einen Kettentrieb, einen Riementrieb oder ein Zahnradgetriebe, beispielsweise um eine schnelle Antriebsdrehung des Hydromotors oder Elektromotors in eine langsamere Förderbewegung der Pick-Up zu wandeln.

Der den autarken Drehantrieb tragende Seitenschenkel des Pick-Up-Schwenkrahmens wird zweckmäßig als Antriebsgehäuse ausgebildet, um den Drehantrieb gegen Beschädigungen und Verschmutzungen abzuschirmen, und auch die Verletzungsgefahr für Personal zu minimieren.

Im Hinblick auf eine günstige Kinematik ist das Kippgelenk und/oder der Zwischenrahmen-Querholm, an welchem das Kippgelenk montiert ist, zwischen der Pick-Up-Achse und der Radträgerschwenkachse angeordnet.

Eine baulich einfache und robuste Ausführungsform zeichnet sich dadurch aus, dass das Kippgelenk in einem am Zwischenrahmen-Querholm fixierten Lagerbock angeordnet ist, und dass der Pick-Up-Schwenkrahmen an einem Querholm in etwa mittig und, vorzugsweise, unterhalb eines Übergabeblechs, einen zum Kippgelenk führenden starren Ausleger aufweist. Vorzugsweise definiert das Kippgelenk eine Z-Achse, um die nach Kontakt zwischen wenigstens einem Anschlag und einer Pendelstütze die gekippte Pick-Up weiter schwenkbar ist.

Schließlich kann es zweckmäßig sein, bei einer Ausführungsform die Pick-Up, die Tasträder und den autarken Drehantrieb in einem Kugelgelenke aufweisenden, durch mindestens eine Spurstange gegenüber dem Ladewagen-Chassis abgestützten Lenker-Doppelparallelogramm ähnlich einer Schlepper-Dreipunkt-Anbauvorrichtung in etwa in der Längsmitte der Pick-Up kippbar beweglich abzustützen.

Ausführungsformen des Erfindungsgegenstandes werden anhand der Zeichnungen erläutert. Es zeigen:
- Fig. 1: eine Druntersicht eines Hauptteiles eines Ladewagens,
- Fig. 2: eine Frontansicht des Ladewagens mit zur Bodenanpassung relativ zu einem Ladewagen-Chassis gekippter Erntegut-Aufnahmevorrichtung mit einer Pick-Up,
- Fig. 3: eine Perspektivansicht zu Fig. 2,
- Fig. 4: eine Schemadarstellung der Aufhängung der Erntegut-Aufnahmevorrichtung des Ladewagens,
- Fig. 5: eine schematische Seitenansicht zu Fig. 4, und
- Fig. 6: eine ergänzende Schemadarstellung zu Fig. 2 und 3.

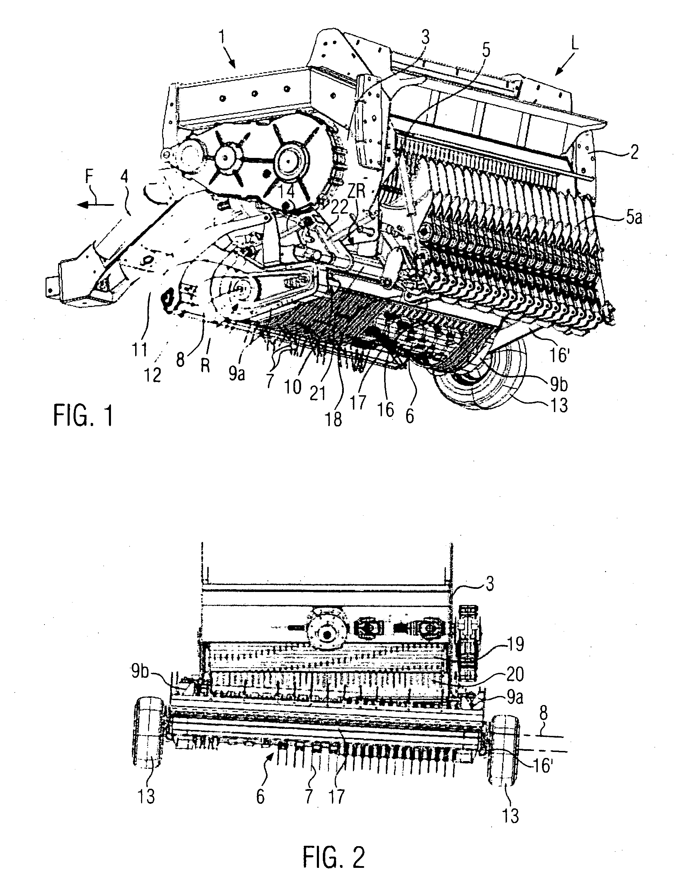

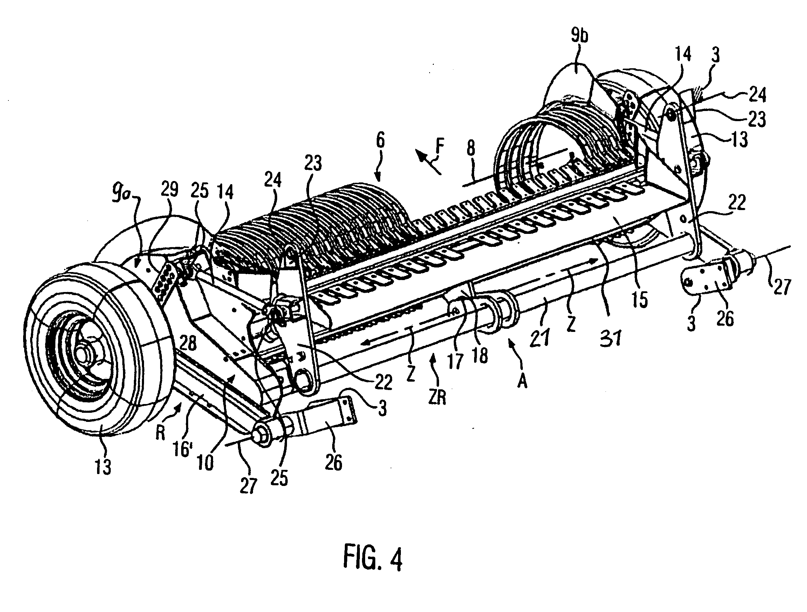

Von einem Ladewagen L ist in den Fig. 1 bis 5 nur ein Teilbereich 1 dargestellt, der mit Verbindungselementen 2 mit nicht gezeigten Teilen des Ladewagens L verbunden wird und ein Ladewagen-Chassis 3 definiert. Am Teilbereich 1 ist vorne eine Zugdeichsel 4 vorgesehen, über die der Ladewagen L mit einem nicht gezeigten Schlepper zu kuppeln ist. Im Teilbereich 1 ist eine Förderstrecke 5 für durch eine Aufnahmevorrichtung aufgenommenes und weitergeliefertes Erntegut vorgesehen, wobei die Aufnahmevorrichtung als Beispiel eine quer zur Fahrtrichtung F orientierte Pick-Up 6 mit Zinken 7 sein kann. Die Pick-Up 6 weist eine um eine Achse 8 drehbare Antriebswelle auf, und ist beidendig in Seitenschenkeln 9a und 9b eines U-förmigen Schwenkrahmens R gelagert, dessen Seitenschenkel 9a, 9b starr an einem in Fig. 4 gezeigten Querholm 31 angebracht sind.

Die Pick-Up 6 weist einen vom Ladewagen-Chassis 3 separierten, autarken Drehantrieb 10 auf, z.B. einen Hydromotor oder einen Elektromotor, der direkt an der Antriebswelle der Pick-Up 6 angreifen könnte, oder, wie gezeigt, über eine Getriebeverbindung, beispielsweise eine Kette oder einen Zahnriemen 11 und einem Antriebsrad 12 die Antriebswelle antreibt. Zweckmäßig ist der Seitenschenkel 9a des Schwenkrahmens R als Getriebegehäuse ausgebildet, das den Drehantrieb 10 und die gegebenenfalls vorgesehene Getriebeverbindung abschirmt. Der Schwenkrahmen R ist Teil einer Aufhängung A der Pick-Up 6 an dem Ladewagen-Chassis 3.

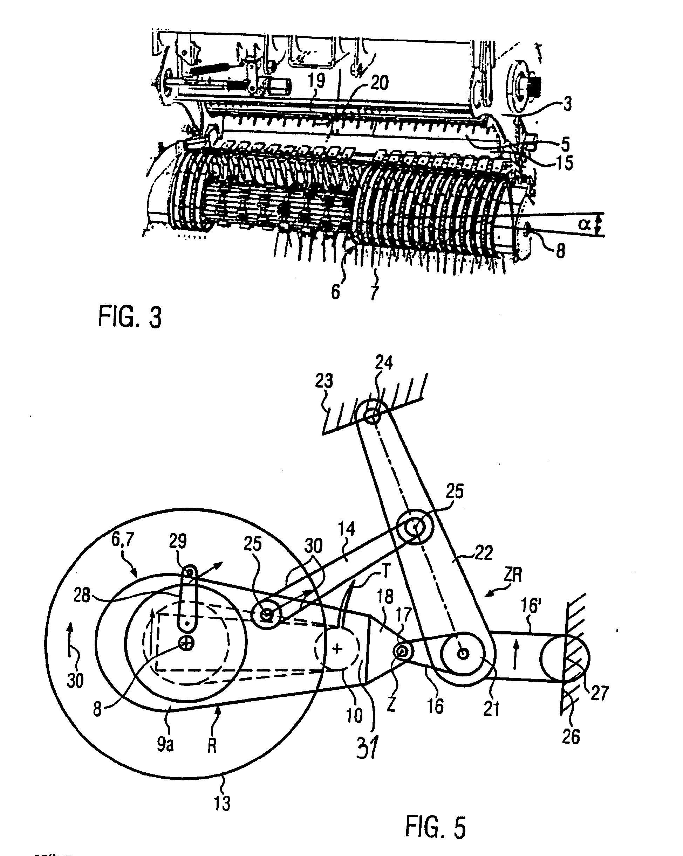

Der nur in Fig. 4 gezeigte Querholm 31 ist etwa in der Längsmitte der Pick-Up 6 mit einem starren Ausleger 18 in einem Lagerbock 16 an einem Querholm 21 eines U-förmigen Zwischenrahmens ZR kippbar abgestützt, z.B. in einem kugelgelenkartigen Kippgelenk 17. Die Pick-Up 6 ist im Kippgelenk 17 relativ zum Ladewagen-Chassis 3 und der Förderstrecke 5 zumindest in etwa auf- und abwärts, jeweils begrenzt, kippbar, wobei die Längsmitte der Pick-Up im Wesentlichen im Kippgelenk 17 abgestützt bleibt. Die Enden des Zwischenrahmen-Querholms 21 (siehe auch Fig. 4 und 5) sind über Seitenschenkel 22 an einer Schwenkachse 24 in Lagerungen 23 am Ladewagen-Chassis 3 schwenkbar abgestützt. Zwei endseitige Pendelstützen 14 koppeln über Kugelgelenke 25 den Zwischenrahmen ZR und den Schwenkrahmen R. Die Schwenkachse 24 liegt am Ladewagen-Chassis 3 z.B. nahe der Achse eines Förderaggregats 19 der Förderstrecke 5 (Fig. 1 bis 3). Das Förderaggregat 19 ist beispielsweise eine Walze mit Zinken oder Stacheln 20, die von der Pick-Up 6 und deren Zinken 7 aufgenommenes Erntegut über ein innerhalb des Zwischenrahmens ZR angeordnetes Übergabeblech 15 übernimmt und entlang der Förderstrecke zu einem nicht gezeigten Laderaum im Ladewagen L fördert. In diesem Bereich kann als Option ein Schneidwerk 5a vorgesehen sein.

An beiden Endseiten der Pick-Up 6 sind Tasträder 13 vorgesehen, deren Drehachsen gegenüber der Achse 8 versetzt sein können, beispielsweise nach unten und/oder in Fahrtrichtung F nach vorne, und die die Pick-Up 6 zur Bodenanpassung auf dem Boden abstützen. Jedes Tastrad 13 ist mit seiner Radachse an einem armartigen Radträger 16' angeordnet. Die Radträger 16' sind um eine gemeinsame Schwenkachse 27 in Lagerungen 26 des Ladewagen-Chassis 3 schwenkbar und zudem über Lenker 28 mit den Seitenschenkeln 9a, 9b des Schwenkrahmens R gekoppelt. Die Lenker 28 sind nach Art von Verstellschienen mit mehreren wahlweise nutzbaren Anlenkstellen 29 ausgebildet, um die Relativpositionen zwischen der Pick-Up 6 und den Tasträdern 13 nach Bedarf ändern zu können.

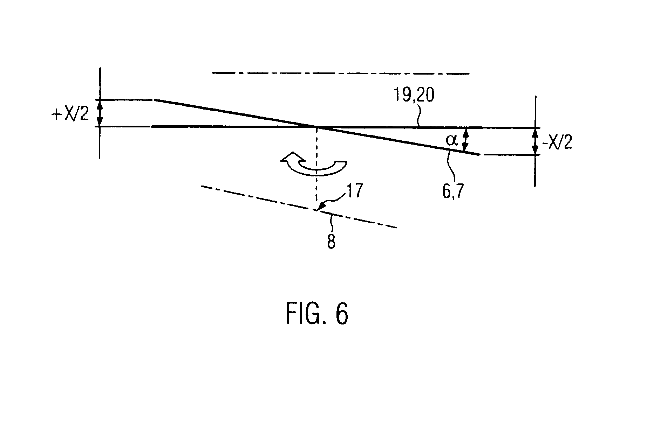

Über den Ausleger 18 stützt sich der Schwenkrahmen R quer zur Fahrtrichtung F ab, und, vorzugsweise, auch in Fahrtrichtung, und zwar am Zwischenrahmen ZR, jedoch derart, dass bei der Bodenanpassung über die Tasträder 13 die Pick-Up 6 nicht nur um eine Achse Z im Kippgelenk 17 am Zwischenrahmen-Querholm 21 auf- und abschwenkt, sondern auch relativ zum Ladewagen-Chassis 3 und zum Förderaggregat 19 Kippbewegungen im Kippgelenk 17 auszuführen vermag, wie dies in den Fig. 2 und 3 angedeutet ist. Bei einer solchen Kippbewegung nähert sich z.B. das linksseitige Ende der Pick-Up 6 der Ebene der Umlaufbahnen der Stacheln oder Zinken 20 des Förderaggregats 19, und entfernt sich das rechtsseitige Ende davon. Hingegen bleibt der Mittelbereich der Pick-Up 6 im Wesentlichen ortsfest (Fig. 6), solange nicht gleichzeitig die Hebe- oder Senkbewegungen überlagert werden. Dies dient dazu, das Spaltmaß zwischen der Pick-Up 6 und dem Förderaggregat 19 bei der Übergabe des Erntegutes stets minimal zu halten, um einen optimalen Erntegutfluss zu gewährleisten. Die beiden Pendelstützen 14 (es könnte nur eine Pendelstütze 14 an einer Endseite der Rahmen R, ZR vorgesehen sein) begrenzen den Rotationsfreiheitsgrad der Pick-Up 6 in der Aufhängung A, ohne die Kippbewegungen zu behindern. Um bei Kippbewegungen, initiiert durch die Tasträder 13, ein Anschlagen der Pick-Up 6 an anderen Komponenten des Ladewagens L zu vermeiden, wird das Ausmaß der Kippbewegungen begrenzt, und zwar durch in Fig. 5 angedeutete Anschläge 30, die elastisches und/oder dämpfendes Material aufweisen. Die Anschläge 30 für die Pendelstützen 14 können am Schwenkrahmen R montiert sein, beispielsweise an den Seitenschenkeln 9, 9a.

Bei einer alternativen, nicht gezeigten Ausführungsform weist die Aufhängung A das mittige Kippgelenk 17 in einem mit Kugelgelenken ausgestatteten Lenker-Doppelparallelogramm auf, das nach Art einer Schlepper-Dreipunkt-Hebevorrichtung gestaltet sein kann, wobei jedoch z.B. eine axiale Führung, z.B. quer zur Fahrtrichtung F über wenigstens eine Spurstange gewährleistet wird.

In Fig. 4 und 5 ist der wenigstens eine zentrale Ausleger 18 am Schwenkrahmen-Querholm 31 fest verankert, wobei der Ausleger 18 hier zwischen Laschen des Lagerbocks 16 ein- und am dort platzierten Kippgelenk 17 angreift. In den Fig. 1, 4 und 5 ist der Drehantrieb 10, der direkt an die Antriebswelle der Pick-Up 6 gesetzt sein könnte, in dem Seitenschenkel 9a untergebracht und an einen flexiblen Versorgungsstrang T (Kabel oder Hydraulikschläuche) angeschlossen, der in das Ladewagen-Chassis 3, oder in die in Fig. 1 gezeigte Zugdeichsel 4 oder direkt zu einem nicht gezeigten Schlepper führt. Der Drehantrieb 10 ist somit bezüglich des Ladewagen-Chassis 3 autark und macht auch die Kippbewegungen der Pick-Up 6 bei der Bodenanpassung mit, ohne eine starre Fluchtung zwischen dem Ladewagen-Chassis und dem Schwenkrahmen R zu erfordern.

Fig. 5 deutet räumliche Beziehungen zwischen den einzelnen Komponenten der Aufhängung A in einer schematischen Seitenansicht an. Die Drehachsen der Tasträder 13 können an den Radträgern 16' unterhalb der Achse 8 der Pick-Up 6 platziert sein, und, gegebenenfalls, sogar in Fahrtrichtung F etwas vor dieser. Die Achse Z des Kippgelenks 17 (das beispielsweise mit mehreren Freiheitsgraden ausgebildet ist) liegt annähernd in der Ebene der Achse 8 und zwischen der Achse 8 und der Schwenkachse 27, z.B. etwas näher bei der Schwenkachse 27.

In Fig. 5 sind die Anschläge 30 beispielsweise am Schwenkrahmen R bzw. den Seitenschenkeln 9a, 9b montiert, die den relativen Schwenkweg der Pendelstützen 14 bei Kippbewegungen der Pick-Up 6 begrenzen und dämpfendes und/oder elastisches Material aufweisen. Die Anschläge 30 könnten auch an anderen Positionen montiert sein als gezeigt, um Überlasten zu vermeiden. Der beispielsweise direkt an der Antriebswelle der Pick-Up 6 angeflanschte Drehantrieb 10 (Hydromotor oder Elektromotor) treibt in Fig. 5 die Pick-Up 6 mit ihren Zinken 7 im Uhrzeigersinn an. Diese Bewegungsrichtung führt zu einer oberschlächtigen Erntegut-Förderung zu der Förderstrecke 5.

Fig. 6 verdeutlicht schließlich schematisch eine Betriebsposition ähnlich der der Fig. 2 und 3, in welcher die Pick-Up 6 durch die Tasträder 13 mit ihren Zinken 7 um einen Winkel α relativ zum Förderaggregat 19 mit dessen Stacheln oder Zinken 20 gekippt ist, und zwar in der Längsmitte im Kippgelenk 17. Die einander schneidenden geraden Linien bei 6, 7 und 19, 20 definieren die Umlaufbahnen der Zinken oder Stacheln 7, 20. Bei dem Winkel α ergibt sich an jeder Endseite der Pick-Up 6 ein maximaler Versatz X/2 mit positivem oder negativem Vorzeichen, d.h., dass sich der Gesamtversatz X hälftig beiderseits des Kippgelenks 17 verteilt, so dass die Ebenen 19, 20 und 6, 7 nicht zu weit gegeneinander versetzt werden, d.h., das Spaltmaß zwischen der Pick-Up 6 und der Übergabestelle zum Förderaggregat 19 (beispielsweise über das Übergabeblech 15 in Fig. 4) bei Kippauslenkungen stets minimal bleibt, um einen optimalen Erntegutfluss zu gewährleisten.

Kommt bei einer über die Tasträder 13 in Y-Richtung (Fig. 4) initiierten Kippbewegung der Pick-Up 6 ein jeweiliger Anschlag 30 zum Kontakt mit der Pendelstütze 14, dann schwenkt anschließend der Schwenkrahmen R um die Z-Achse, und schwenkt gegebenenfalls auch der Zwischenrahmen ZR um die Schwenkachse 24. Der Zwischenrahmen ZR ist ferner zum Ausheben der Pick-Up 6, z.B. am Vorgewende oder für Transportfahrt, nutzbar. Hierfür können nicht gezeigte Aktoren am Zwischenrahmen ZR angreifen, und/oder am Schwenkrahmen R.

Da der Drehantrieb 10 der Pick-Up 6 unabhängig vom Drehantrieb des Förderaggregats 29 ist, können die Antriebsgeschwindigkeiten dieser beiden Aggregate nicht nur unterschiedlich gewählt sondern auch variiert werden, beispielsweise nach Erntegutanfall vor der Pick-Up 6 und/oder dem Erntegut-Volumenstrom entlang der Förderstrecke 5. Ferner können die Antriebsgeschwindigkeiten mit einer variierenden Fahrgeschwindigkeit des Ladewagens L korreliert werden, um einen gleichmäßigen Volumenstrom in den Ladewagen zu erzeugen bzw. um Verstopfungen vor dem Förderaggregat in der Förderstrecke und gegebenenfalls beim Schneidwerk zu vermeiden.

## Patentansprüche

1. Ladewagen (L) für Erntegut, mit einer über seitlich außenliegende an im Chassis (3) schwenkbaren Radträgern (16') angeordnete Tasträder (13) auf dem Untergrund abgestützten, Erntegut aufnehmenden und einem in einem Ladewagen-Chassis (3) angeordneten Förderaggregat (19, 20) liefernden Pick-Up (6, 7), die durch einen Drehantrieb (10) um eine zumindest im Wesentlichen quer zur Fahrtrichtung (F) liegende, annähernd bodenparallele Achse (8) drehbar ist, und mit einer zwischen der Pick-Up (6) und dem Ladewagen-Chassis (3) vorgesehenen, die Pick-Up (6) quer zur und in Fahrtrichtung (F) relativ zum Ladewagen-Chassis (3) abstützenden, zumindest Höhenverlagerungen der in einem U-förmigen Pick-Up-Schwenkrahmen (R) gelagerten Pick-Up (6) relativ zum Förderaggregat (29) zulassenden Aufhängung (A), **dadurch gekennzeichnet, dass** die Pick-Up (6) in der Aufhängung (A) zumindest in etwa in ihrer axialen Längsmitte kippbar abgestützt ist und einen autarken Drehantrieb (10 aufweist, der zumindest bei über die Tasträder (13) im Wesentlichen auf- und abwärts relativ zum Ladewagen-Chassis (3) initiierten Kippbewegungen der Pick-Up (6) zusammen mit dieser bewegbar ist und dass die Aufhängung (A) ein auf die Längsmitte der Pick-Up (6) ausgerichtetes, gegenüber der Achse (8) in Fahrtrichtung (F) versetztes Kippgelenk (17) für den Schwenkrahmen (R) aufweist.

2. Ladewagen nach Anspruch 1, **dadurch gekennzeichnet, dass** das Kippgelenk (17) ein Kugelgelenk ist.

3. Ladewagen nach Anspruch 1, **dadurch gekennzeichnet, dass** die Aufhängung (A) einen U-förmigen Zwischenrahmen (ZR) mit am Ladewagen-Chassis (3) um eine Schwenkachse (24) schwenkbar angelenkten Seitenschenkeln (22) und einem zur Achse (8) in etwa parallelen Querholm (21) aufweist, dass das Kippgelenk (17) zwischen dem Querholm (21) und dem Schwenkrahmen (R) angeordnet ist, und dass der Zwischenrahmen (ZR) mit dem Schwenkrahmen (R) zusätzlich über seitliche Pendelstützen (14) gelenkig gekoppelt ist, vorzugsweise über je eine endseitige, kugelgelenkartig eingekoppelte Pendelstütze (14) zwischen einem Zwischenrahmen-Seitenschenkel (22) und einem Schwenkrahmen-Seitenschenkel (9a, 9b).

4. Ladewagen nach Anspruch 1, **dadurch gekennzeichnet, dass** der Radträger (16') mit einem Schwenkrahmen-Seitenschenkel (9a, 9b) über einen mehrere Anlenkstellen (29) aufweisenden Einstellschienen-Lenker (28) gekoppelt ist.

5. Ladewagen nach Anspruch 3, **dadurch gekennzeichnet, dass** die Pick-Up (6) mit den Tasträdem (13) über den Zwischenrahmen (ZR), das Kippgelenk (17) und die Pendelstützen (14) relativ zum Ladewagen-Chassis (3) aushebbar ist.

6. Ladewagen nach Anspruch 3, **dadurch gekennzeichnet, dass**, vorzugsweise, an den Schwenkrahmen-Seitenschenkeln (9a, 9b), Kippbewegungen der Pick-Up (6) begrenzende Anschläge (30) für die Pendelstützen (14) vorgesehen sind, und dass die Anschläge (30) mit dämpfendem und/oder elastischem Material wirken.

7. Ladewagen nach Anspruch 1, **dadurch gekennzeichnet, dass** der autarke Drehantrieb (10) an einem Seitenschenkel (9a) des Schwenkrahmens (R) montiert ist und einen Hydromotor oder Elektromotor aufweist, der entweder direkt oder über eine Getriebeverbindung (11, 12) an einer Antriebswelle der Pick-Up (6) angreift.

8. Ladewagen nach Anspruch 7, **dadurch gekennzeichnet, dass** vom Drehantrieb (10) wenigstens ein flexibler Versorgungsstrang (T) zum Ladewagen-Chassis (3) oder einer Zugdeichsel (4) oder einem Ladewagen-Schlepper führt.

9. Ladewagen nach Anspruch 7, **dadurch gekennzeichnet, dass** die Getriebeverbindung (11, 12) einen Kettentrieb, Riementrieb oder ein Zahnradgetriebe aufweist.

10. Ladewagen nach Anspruch 7, **dadurch gekennzeichnet, dass** der den autarken Drehantrieb (10) tragende Schwenkrahmen-Seitenschenkel (9a) als Antriebsgehäuse ausgebildet ist.

11. Ladewagen nach wenigstens einem der vorhergehenden Ansprüche, **dadurch gekennzeichnet, dass** das Kippgelenk (17) und/oder der Zwischenrahmen-Querholm (21) zwischen der Achse (8) und der Radträger-Schwenkachse (27) angeordnet ist.

12. Ladewagen nach Anspruch 3, **dadurch gekennzeichnet, dass** das Kippgelenk (17) in einem am Zwischenrahmen-Querholm (21) fixierten Lagerbock (16) angeordnet ist, und dass der Schwenkrahmen (R) an einem Querträger (31) in etwa mittig und, vorzugsweise unterhalb eines Übergabeblechs (15), einen zum Kippgelenk (17) führenden starren Ausleger (18) aufweist und das Kippgelenk (17) eine Z-Achse definiert, um die nach Kontakt zwischen wenigstens einem Anschlag (30) und einer Pendelstütze (14) die Pick-Up (6) weiter schwenkbar ist.

13. Ladewagen nach Anspruch 1, **dadurch gekennzeichnet, dass** die Pick-Up (6) mit den Tasträdern (13) und dem autarken Drehantrieb (10) in einem Kugelgelenke aufweisenden, durch mindestens eine Spurstange stabilisierten Lenker-Doppelparallelogramm ähnlich einer Schlepper-Dreipunkt-Anbauvorrichtung in etwa in der Längsmitte der Pick-Up (6) relativ zum Ladewagen-Chassis (3) kippbar abgestützt ist.

## Claims

1. Loading vehicle (L) for harvest material, comprising a pick-up (6, 7) supported on the ground by sideward outer feeler wheels (13) arranged at wheel carriers (16') pivotable in a chassis (3), for collecting and supplying the harvest material to a conveying aggregate (19, 20) situated in the loading vehicle chassis (3), which pick-up (6, 7) can be rotated by a rotary drive (10) about an axis (8) which is substantially parallel to the ground and extends at least substantially transverse to a vehicle driving direction (F), and a suspension (A) provided between the pick-up (6) and the loading vehicle chassis (3) and supporting the pick-up (6) transverse to the and in travelling direction (F) relative to the loading vehicle chassis (3) and allowing at least height displacements of the pick-up (6) relative to the conveying aggregate (29), the pick-up (6) being suspended in a U-shaped pick-up pivot frame (R) **characterised in that** the pick-up (6) is at least tiltably suspended in the suspension (A) about in the middle of its axial length and comprises an autarkic rotary drive (10) which in case of at least tilting motions of the pick-up (6) upwardly and downwardly relative to the loading vehicle chassis (3) and initiated via the feeler wheels (13) is moveable substantially in common with the pick-up (6), and that the suspension (A) comprises a tilt hinge (17) for the pivot frame (R) which tilt hinge (17) is aligned with the longitudinal centre of the pick-up (6) and is offset in travelling direction (F) relative to the axis (8).

2. Loading vehicle according to claim 1, **characterised in that** the tilt hinge (17) is a ball joint.

3. Loading vehicle according to claim 1, **characterised in that** the suspension (A) comprises a U-shaped intermediate frame (ZR) having outer legs (22) which are pivotally linked to the loading vehicle chassis (3) about a pivot axis (24), and a lateral bar (21) extending substantially parallel to the axis (8), that the tilt hinge (17) is arranged between the lateral bar (21) and the pivot frame (R), and that the intermediate frame (ZR) additionally is coupled in articulated fashion via sideward supports (14) with the pivot frame (R), preferably via a support (14) at an end side which is coupled in ball joint fashion between and intermediate frame side leg (22) and pivot frame side leg (9a, 9b).

4. Loading vehicle according to claim 1, **characterised in that** the wheel carrier (16') is coupled with a pivot frame side leg (9a, 9b) via a link (28) having several linking locations (29) and defining an adjustment rail.

5. Loading vehicle according to claim 3, **characterised in that** the pick-up (6) can be displaced in height direction relative to the loading vehicle chassis (3) together with the feeler wheels (13) via the intermediate frame (ZR), the tilt hinge (17) and the supports (14).

6. Loading vehicle according to claim 3, **characterised in that**, preferably, at the pivot frame side legs (9a, 9b) stops (30) are provided for the supports (14) in order to limit a tilting movement of the pick-up (6), and that the stops (30) are acting with the help of damping material and/or elastic material.

7. Loading vehicle according to claim 1, **characterised in that** the autarkic rotary drive (10) is mounted to a side leg (9a) of the pivot frame (R) and comprises either a hydromotor or an electric motor, which engages either directly or via a gear connection (11, 12) at a driving shaft of the pick-up (6).

8. Loading vehicle according to claim 7, **characterised in that** at least one flexible supply strand (T) extends from the rotary drive (10) to the loading vehicle chassis (3) or to a towing bar (4) or to a loading vehicle tractor, respectively.

9. Loading vehicle according to claim 7, **characterised in that** the gear connection (11, 12) comprises a chain drive, a belt drive or a gear wheel transmission.

10. Loading vehicle according to claim 7, **characterised in that** the pivot frame side leg (9a) carrying the autarkic rotary drive (10) is formed as a drive housing.

11. Loading vehicle according to at least one of the preceding claims, **characterised in that** the tilt hinge (17) and/or the lateral bar (21) of the intermediate frame is arranged between the axis (8) and a pivot axis (27) of the wheel carrier.

12. Loading vehicle according to claim 3, **characterised in that** the tilt hinge (17) is arranged in a bearing block (16) fixed at the lateral bar (21) of the intermediate frame, and that the pivot frame (R) comprises about in the middle of a lateral beam (31) of the pivot frame (R) a rigid extension arm (18) extending to the tilt hinge (17), preferably underneath a transfer metal sheet (15), that the tilt hinge (17) defines a Z-axis about which Z-axis the pick-up (6) can be pivoted further after contact between at least one stop (30) and one support (17).

13. Loading vehicle according to claim 1, **characterised in that** the pick-up (6), the feeler wheels (13) and the autarkic rotary drive (10) are commonly tiltable supported about at the longitudinal centre of the pick-up (6) and relative to the loading vehicle chassis (3) in a linkage double parallelogram, similar to a tractor three-point hitching device, the parallelogram containing ball joints and being stabilised by at least one steering tie rod.

## Revendications

1. Véhicule de chargement (L) pour produits de récolte, avec un ramasseur (6, 7) qui est en appui sur le sol par l'intermédiaire de tâteurs à roues (13) disposés latéralement à l'extérieur sur des supports de roues (16') aptes à pivoter dans le châssis (3), qui ramasse les produits de récolte, qui fournit un bloc d'acheminement (19, 20) disposé dans un châssis de véhicule de chargement (3), et qui est apte à tourner grâce à un entraînement rotatif (10) sur un axe (8) approximativement parallèle au sol et situé au moins globalement transversalement par rapport au sens de marche (F), et avec une suspension (A) qui est prévue entre le ramasseur (6) et le châssis de véhicule de chargement (3), qui supporte le ramasseur (6) par rapport au châssis (3), transversalement par rapport au sens de marche (F) et dans le sens de marche (F), et qui permet au moins des déplacements en hauteur du ramasseur (6) monté dans un châssis pivotant de ramasseur en U (R) par rapport au bloc d'acheminement (29), **caractérisé en ce que** le ramasseur (6) est supporté dans la suspension (A) pour pouvoir basculer au moins à peu près dans son centre longitudinal axial, et comporte un entraînement rotatif autonome (10) qui est apte à être déplacé avec le ramasseur (6) au moins lors de basculements de celui-ci provoqués par l'intermédiaire des tâteurs à roues (13) globalement vers le haut et vers le bas par rapport au châssis de véhicule de chargement (3), et **en ce que** la suspension (A) comporte une articulation de basculement (17) pour le châssis pivotant (3) qui est alignée sur le centre longitudinal du ramasseur (6) et qui est décalée par rapport à l'axe (8) dans le sens de marche (F).

2. Véhicule de chargement selon la revendication 1, **caractérisé en ce que** l'articulation de basculement (17) est constituée par une articulation sphérique.

3. Véhicule de chargement selon la revendication 1, **caractérisé en ce que** la suspension (A) comporte un châssis intermédiaire en U (ZR) avec des branches latérales (22) articulées sur le châssis de véhicule de chargement (3) pour pouvoir pivoter sur un axe de pivotement (24), et avec une traverse (21) à peu près parallèle à l'axe (8), **en ce que** l'articulation sphérique (17) est disposée entre la traverse (21) et le châssis pivotant (R), et **en ce que** le châssis intermédiaire (ZR) est couplé en supplément de manière articulée au châssis pivotant (R) par l'intermédiaire de supports oscillants latéraux (14), de préférence d'un support oscillant (14) prévu à chaque extrémité et couplé à la manière d'une articulation sphérique, entre une branche latérale de châssis intermédiaire (22) et une branche latérale de châssis pivotant (9a, 9b).

4. Véhicule de chargement selon la revendication 1, **caractérisé en ce que** le support de roue (16') est couplé à une branche latérale de châssis pivotant (9a, 9b) par l'intermédiaire d'un bras de rail de réglage (28) comportant plusieurs points d'articulation (29).

5. Véhicule de chargement selon la revendication 3, **caractérisé en ce que** le ramasseur (6) est apte à être soulevé avec les tâteurs à roues (13) par rapport au châssis de véhicule de chargement (3) par l'intermédiaire du châssis intermédiaire (ZR), de l'articulation de basculement (17) et des supports oscillants (14).

6. Véhicule de chargement selon la revendication 3, **caractérisé en ce qu'**il est prévu de préférence, sur les branches latérales de châssis pivotant (9a, 9b), des butées (30) pour les bras oscillants (14) qui limitent les basculements du ramasseur (6), et **en ce que** les butées (30) agissent avec un matériau amortisseur et/ou élastique.

7. Véhicule de chargement selon la revendication 1, **caractérisé en ce que** l'entraînement rotatif autonome (10) est monté sur une branche latérale (9a) du châssis pivotant (R) et comporte un moteur hydraulique ou un moteur électrique qui agit sur un arbre d'entraînement du ramasseur (6) directement ou par l'intermédiaire d'une liaison de transmission (11, 12).

8. Véhicule de chargement selon la revendication 7, **caractérisé en ce qu'**à partir de l'entraînement rotatif (10), au moins une ligne d'alimentation flexible (T) va jusqu'au châssis de véhicule de chargement (3) ou à une barre d'attelage (4) ou à un tracteur de véhicule de chargement.

9. Véhicule de chargement selon la revendication 7, **caractérisé en ce que** la liaison de transmission (11, 12) comporte une transmission à chaîne, une transmission à courroie ou une transmission à engrenage.

10. Véhicule de chargement selon la revendication 7, **caractérisé en ce que** la branche latérale de châssis pivotant (9a) qui porte l'entraînement rotatif autonome (10) est conçu comme un carter d'entraînement.

11. Véhicule de chargement selon l'une au moins des revendications précédentes, **caractérisé en ce que** l'articulation de basculement (17) et/ou la traverse de châssis intermédiaire (21) sont disposées entre l'axe (8) et l'axe de pivotement de support de roue (27).

12. Véhicule de chargement selon la revendication 3, **caractérisé en ce que** l'articulation de basculement (17) est disposée dans un palier (16) fixé à la traverse de châssis intermédiaire (21), et **en ce que** le châssis pivotant (R) comporte sur une traverse (31), à peu près au centre et de préférence au-dessous d'une tôle de transfert (15), un socle rigide (18) qui mène à l'articulation de basculement (17), et ladite articulation de basculement (17) définit un axe Z sur lequel, après un contact entre au moins une butée (30) et un support oscillant (14), le ramasseur (6) peut pivoter davantage.

13. Véhicule de chargement selon la revendication 1, **caractérisé en ce que** le ramasseur (6) avec les tâteurs à roues (13) et l'entraînement rotatif autonome (10) est supporté, de manière à pouvoir basculer par rapport au châssis de véhicule de chargement (3) à peu près au milieu longitudinal du ramasseur (6), dans un double parallélogramme articulé qui comporte des articulations sphériques et qui est stabilisé par au moins une barre d'accouplement, à la manière d'un dispositif d'attelage à trois points.
